(19) **Europäisches Patentamt / European Patent Office / Office européen des brevets**

(11) **EP 4 620 649 A1**

(12) **EUROPEAN PATENT APPLICATION**
published in accordance with Art. 153(4) EPC

(43) Date of publication:
**24.09.2025 Bulletin 2025/39**

(21) Application number: **23891312.3**

(22) Date of filing: **25.10.2023**

(51) International Patent Classification (IPC):
**B29C 39/24** (2006.01)   **B29C 39/44** (2006.01)
**F16J 15/00** (2006.01)   **F16J 15/14** (2006.01)

(52) Cooperative Patent Classification (CPC):
**B29C 39/24; B29C 39/44; F16J 15/00; F16J 15/14;**
Y02E 60/50

(86) International application number:
**PCT/JP2023/038602**

(87) International publication number:
**WO 2024/106157 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022 JP 2022184913**

(71) Applicant: **ThreeBond Co., Ltd.**
**Tokyo 192-0398 (JP)**

(72) Inventors:
• **SUZUKI, Nao**
**Hachioji-shi, Tokyo 192-0398 (JP)**
• **TANAKA, Masayuki**
**Hachioji-shi, Tokyo 192-0398 (JP)**
• **ITO, Hiroaki**
**Hachioji-shi, Tokyo 192-0398 (JP)**
• **KADO, Takuma**
**Hachioji-shi, Tokyo 192-0398 (JP)**
• **TAKAHASHI, Toshiyuki**
**Hachioji-shi, Tokyo 192-0398 (JP)**
• **HASHIGUCHI, Shinpei**
**Hachioji-shi, Tokyo 192-0398 (JP)**

(74) Representative: **Haseltine Lake Kempner LLP**
**One Portwall Square**
**Portwall Lane**
**Bristol BS1 6BH (GB)**

(54) **GASKET MOLDING METHOD, SEALING METHOD, GASKET, COMPOSITE BODY AND FUEL CELL**

(57) The present invention is a gasket molding method for molding a gasket on a workpiece, the gasket molding method including, in the stated order: an application step of applying an active energy ray curable liquid having a structural viscosity ratio of 1.5 or more and 4.0 or less into a cavity of a molding die; a bonding step of bonding the molding die coated with the active energy ray curable liquid and the workpiece to each other; a curing step of curing the applied active energy ray curable liquid by irradiation with an active energy ray; and a mold release step of pulling off the cured active energy ray curable liquid from the molding die together with the workpiece, in which the application step includes an overlapping region of application trajectories. Accordingly, there is provided a gasket molding method by which mixing of air bubbles in an overlapping region of application trajectories is suppressed.

EP 4 620 649 A1

**(Cont. next page)**

[FIG.2B]

**Description**

## TECHNICAL FIELD

The present invention relates to a gasket molding method, a sealing method, a gasket, a composite body, and a fuel cell.

## BACKGROUND ART

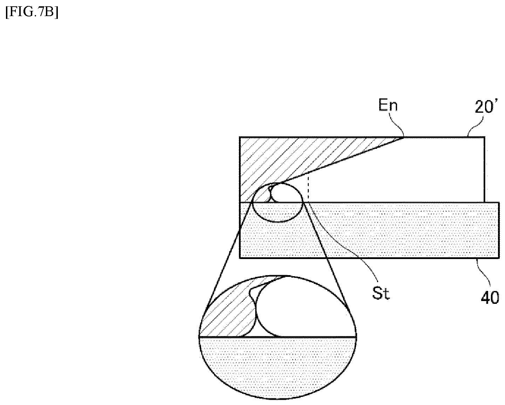

A gasket is known as a component that is used to seal between two components. Such a gasket is generally molded by applying (discharging) a molding resin such as a thermoplastic resin from a dispenser onto a substrate (see Patent Literature 1). Since the gasket to be molded has a closed shape such as a circular shape or a rectangular shape, the dispenser starts from an application start point St and returns to an application start point En (see Fig. 7B). However, in practice, the application end point En often exists at a position beyond the application start point St so that the joint does not become parallel to a height direction.

Citation List

Patent Literature

Patent Literature 1: JP 2017-015240 A

## SUMMARY OF INVENTION

Technical Problem

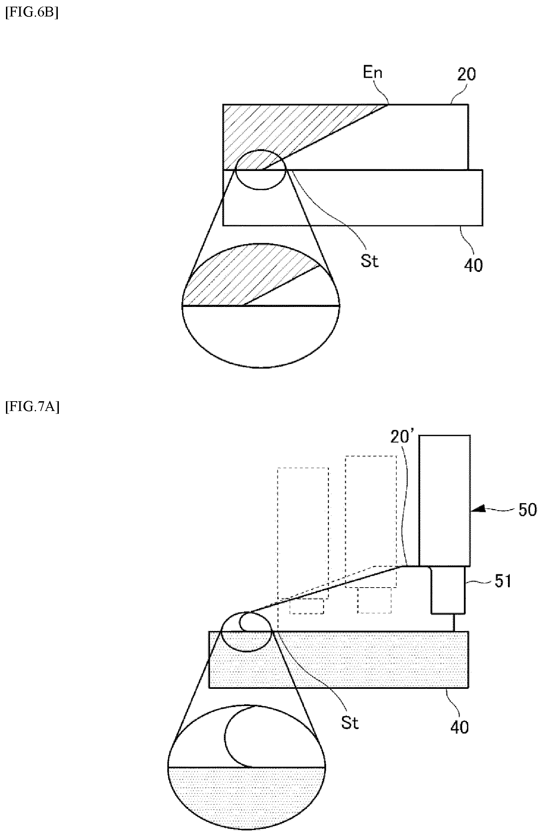

In the case of the gasket molding method using such a dispenser, as indicated by the broken line in Fig. 7A, the discharge amount does not become a prescribed discharge amount from the application start time St, but gradually increases to reach the prescribed discharge amount. As indicated by the solid line in Fig. 7A, with the lapse of time, the liquid causes wet-spreading, dripping, and the like due to its own viscosity, and the applied shape changes. At this time, since the tip portion of the application start point contracts so as to be rounded, a minute gap is formed between the tip portion and the surface of the molding die.

Then, when the dispenser returns to the original position of the closed trajectory and comes immediately before the application end point En, the dispenser rides on the preceding liquid, and the application step ends. The subsequent liquid runs on the preceding liquid, so that the gap formed between the tip portion and the molding die is confined, and the running also forms the gap between the preceding liquid and the subsequent liquid. Therefore, these gaps remain in the gasket as air bubbles (see Fig. 7B).

Therefore, the present invention has been made in view of the above problems, and an object thereof is to provide a gasket molding method by which mixing of air bubbles in an overlapping region of application trajectories is suppressed, a sealing method, a gasket, a composite body, and a fuel cell.

Solution to Problem

(1) One aspect according to the present invention is a gasket molding method for molding a gasket on a workpiece, the gasket molding method including, in the stated order: an application step of applying an active energy ray curable liquid having a structural viscosity ratio of 1.5 or more and 4.0 or less into a cavity of a molding die; a bonding step of bonding the molding die coated with the active energy ray curable liquid and the workpiece to each other; a curing step of curing the applied active energy ray curable liquid by irradiation with an active energy ray; and a mold release step of pulling off the cured active energy ray curable liquid from the molding die together with the workpiece, in which the application step includes an overlapping region of application trajectories, provided that the structural viscosity ratio is a value obtained by dividing a viscosity (Pa·s) at a shear rate of 1.0 (1/s) by a viscosity (Pa·s) at a shear rate of 10.0 (1/s).

(2) In the aspect of (1), a viscosity at a shear rate of 1.0 (1/s) at 25°C of the active energy ray curable liquid may be 12 Pa·s or more and 100 Pa·s or less.

(3) In the aspect of (1) or (2), a viscosity at a shear rate of 10.0 (1/s) at 25°C of the active energy ray curable liquid may be 5 Pa·s or more and 70 Pa·s or less.

(4) In the aspect of any one of (1) to (3), the active energy ray curable liquid may contain an oligomer having an acryloyl group, an acryloyl group-containing monomer, a photoradical initiator, and silica.

(5) In the aspect of (4), an average particle size of the silica may be 15 nm or more and 8500 nm or less.

(6) In the aspect of (4), a content of the silica may be 0.1 mass% or more and 50 mass% or less.

(7) In the aspect of any one of (1) to (6), the molding die may have a cavity having a trapezoidal shape.

(8) In the aspect of any one of (1) to (7), the application step may be performed using a dispenser.

(9) In the aspect of (8), a relative moving speed of the dispenser in the application step may be 1 mm/sec or more and 500 mm/sec or less.

(10) In the aspect of any one of (1) to (9), the overlapping region of application trajectories may include an application start point and an application end point.

(11) In the aspect of any one of (1) to (10), the overlapping region of application trajectories may include an intersection of one trajectory and another trajectory.

(12) In the aspect of any one of (1) to (11), the inside of the cavity of the molding die may be subjected to a water-repellent coating treatment.

(13) Another aspect according to the present invention is a gasket obtained by the aspect according to any one of (1) to (12).

(14) Another aspect according to the present invention is a composite body including a gasket obtained by the gasket molding method of the aspect of any one of (1) to (12) on a fuel cell component that is a workpiece.

(15) Another aspect according to the present invention is a fuel cell including the composite body of (14).

(16) In the fuel cell of the aspect of (14), the fuel cell component may be selected from the group consisting of a separator, an electrolyte membrane, a frame, and an electrolyte membrane/electrode assembly.

(17) Another aspect according to the present invention is a sealing method for sealing between two workpieces, the sealing method including: a molding step of molding a gasket on one workpiece by the gasket molding method of the aspect of any one of (1) to (12); and a pressure welding step of disposing the other workpiece on the gasket molded on the one workpiece and pressure-welding the one workpiece and the other workpiece.

Advantageous Effects of Invention

According to the present invention, it is possible to provide a gasket molding method by which mixing of air bubbles in an overlapping region of application trajectories is suppressed, a sealing method, a gasket, a composite body, and a fuel cell.

**BRIEF DESCRIPTION OF DRAWINGS**

Fig. 1 is a schematic plan view illustrating a workpiece in which a gasket is molded.

Fig. 2A is a flowchart illustrating a gasket molding method of an embodiment according to the present invention.

Fig. 2B is an operation diagram illustrating the gasket molding method of the embodiment according to the present invention.

Fig. 3 is a schematic perspective view illustrating a molding die.

Fig. 4 is a schematic cross-sectional view illustrating a fuel cell.

Fig. 5 is a flowchart illustrating a sealing method for sealing between two components.

Fig. 6A is a schematic view illustrating the behavior of an active energy ray curable liquid after application of the gasket molding method of the embodiment according to the present invention.

Fig. 6B is a schematic view illustrating a state of the active energy ray curable liquid in an overlapping region of the gasket molding method of the embodiment according to the present invention.

Fig. 7A is a schematic view illustrating the behavior of an active energy ray curable liquid after application of a conventional gasket molding method.

Fig. 7B is a schematic view illustrating a state of the active energy ray curable liquid in an overlapping region of the conventional gasket molding method.

## DESCRIPTION OF EMBODIMENTS

Hereinafter, embodiments according to the present invention will be described in detail with reference to the drawings. In the embodiments of the present specification, the same members are denoted by the same reference numerals throughout.

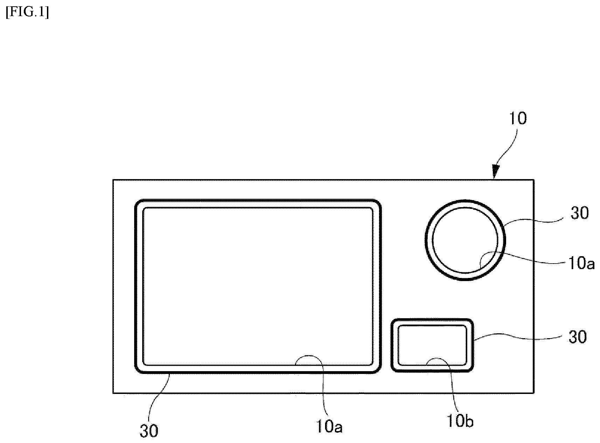

First, before describing a gasket molding method of an embodiment according to the present invention, a brief description will be given of a workpiece 10 in which a gasket 30 is molded. Fig. 1 is a schematic plan view illustrating the workpiece 10 in which the gasket 30 is molded.

The workpiece 10 is one or the other of two components assembled together through the gasket 30 and is of a desired size and shape, and for example, the workpiece is made of a metal such as iron, aluminum, stainless steel, magnesium, or titanium, carbon, or a resin such as polyvinyl chloride, polyethylene naphthalate, polyethylene terephthalate, polyethylene, polypropylene, or polycarbonate. Note that the workpiece 10 of the present embodiment has a rectangular plate shape.

The workpiece 10 has one or more openings 10a or one or more recesses 10b formed therein. The gasket 30 is formed around these openings 10a and recesses 10b. The workpiece 10 preferably has a flat surface on which the gasket 30 is formed, but may have a surface portion that is gently inclined.

However, the workpiece 10 may not have the openings 10a and the recesses 10b, and the other component may have these openings 10a and recesses 10b.

Next, a gasket molding device used in the gasket molding method of the embodiment according to the present invention will be briefly described.

The gasket molding device mainly includes an application device, a bonding device, an XYZ-axis drive device, an active energy ray irradiation device 60, a release device, and a control device.

The application device is capable of applying a liquid to an object to be coated, and may be any device as long as it is used for an application method such as a dispenser, a spray, an inkjet, screen printing, or gravure printing, and among them, a dispenser, an inkjet, and screen printing are preferable, and a dispenser 50 is particularly preferable. The application device of the present embodiment includes the dispenser 50 that discharges a liquid from a nozzle 51 toward an object to be coated, a tank or syringe that stores the liquid, and a pump that supplies the liquid. Note that a rotation mechanism to rotate the nozzle 51 about the Z axis may be provided in the application device. Examples of the dispenser 50 include the Mohno system (uniaxial eccentric screw rotation system), a volumetric piston system with a plunger, and the like, and among them, a volumetric piston system with a plunger is preferable because fewer air bubbles are entrained.

In the present invention, examples of the shape of a discharge port of the nozzle 51 include a round shape, a triangular shape, a quadrangular shape, a trapezoidal shape, and the like. In the present invention, the opening diameter (passage diameter) of the discharge port of the nozzle 51 is not particularly limited as long as it is equal to or smaller than the opening of a cavity 41, and is, for example, 0.1 to 20 mm and further preferably 0.3 to 5 mm. Note that the relative moving speed of the dispenser 50 in an application step S1 described later is not particularly limited, and is, for example, 1 to 500 mm/sec, preferably 10 to 200 mm/sec, and particularly preferably 50 to 150 mm/sec.

The bonding device may be a clamshell type having a fixed table for holding one of objects to be bonded (molding die 40), a movable table for holding the other of the objects to be bonded (workpiece 10), and a reversing drive unit for reversely moving the movable table toward or away from the fixed table. However, the structure of the bonding device is not limited to the clamshell type.

The bonding device also includes an imaging device such as a CCD camera for capturing an image of the objects to be bonded so that the position, inclination, and the like of the objects to be bonded can be checked during bonding. The bonding device is also used as the release device for separating the bonded objects. However, the release device and the bonding device may be provided independently.

The XYZ-axis drive device includes an X-axis moving unit that moves the dispenser 50 in a left-right direction, a Y-axis moving unit that moves the dispenser 50 in a front-rear direction, and a Z-axis moving unit that moves the dispenser 50 in an up-down direction. However, the XYZ-axis drive device may have any combination as long as it can move the dispenser 50 along the three-dimensional XYZ axes relative to an object to be coated, and for example, may include an XY table that holds the dispenser 50 and a Z table that holds an object to be coated.

The active energy ray irradiation device 60 irradiates light such as ultraviolet rays and electron beams, and is configured as a linear light source or planar surface light source with a UV lamp or UV-LED. The active energy ray irradiation device 60 is provided to be movable or stationary with respect to an object to be coated. However, the active energy ray irradiation device 60 may be installed behind the dispenser 50 in the direction of movement to cure the liquid while applying the liquid.

The control device integrally controls the application device, the bonding device (release device), the XYZ-axis drive device, and the active energy ray irradiation device 60, and for example, controls the rotational speed (rotational frequency, rotation angle) of the pump to adjust the discharge amount of the dispenser 50, controls the rotational speed (rotation angle) of the reversing drive unit to adjust the bonding load and push-in amount, thereby controlling the load or the position of the movable table, controls the position and speed of the dispenser 50 by driving each driving unit of the XYZ-axis drive device, or controls the power supply of the active energy ray irradiation device 60 to adjust the irradiation output of the light source.

Next, the gasket molding method for molding the gasket 30 on the workpiece 10 using an active energy ray curable liquid 20 will be described.

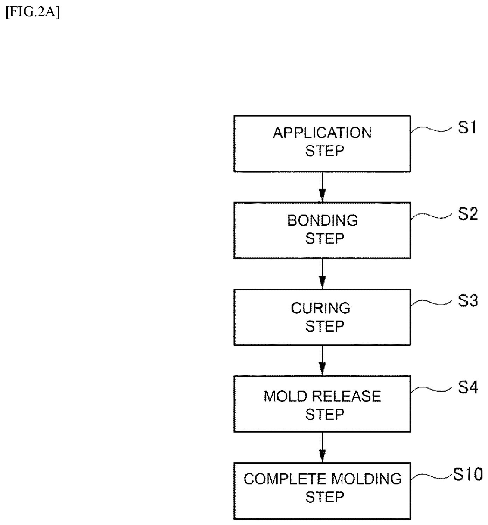

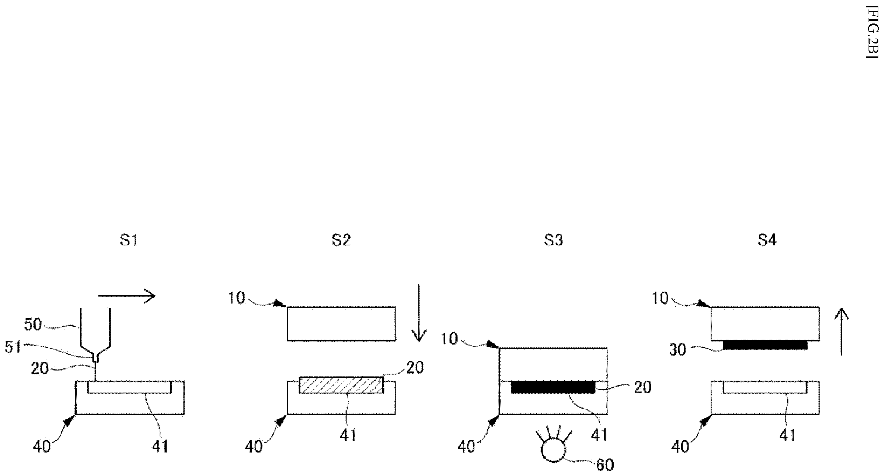

Fig. 2 illustrates the gasket molding method of the embodiment according to the present invention, Fig. 2A is a flowchart, and Fig. 2B is an operation diagram.

The active energy ray curable liquid 20 is an ultraviolet curable resin that reacts and cures by irradiation with an active energy ray (for example, ultraviolet rays), and may be, for example, a (meth)acrylate-based composition that undergoes radical polymerization or an epoxy-based composition that undergoes cationic polymerization.

Note that, in the present invention, the term "liquid" means a liquid at 25°C. The viscosity at a shear rate of 1.0 (1/s) at 25°C of the active energy ray curable liquid 20 is not particularly limited, and is, for example, 500 Pa·s or less, preferably 0.01 Pa·s or more and 400 Pa·s or less, further preferably 0.1 Pa·s or more and 350 Pa·s or less, and particularly preferably 12 Pa·s or more and 100 Pa·s or less. The viscosity at a shear rate of 10.0 (1/s) is, for example, 5 Pa·s or more and 70 Pa·s or less and preferably 7 Pa·s or more and 35 Pa·s or less. The structural viscosity ratio at 25°C of the active energy ray curable liquid 20 is not particularly limited, and is, for example, 1.0 or more and 10 or less, preferably 1.1 or more and 8 or less, further preferably 1.3 or more and 7 or less, and particularly preferably 1.5 or more and 4 or less. When the viscosity or the structural viscosity ratio is within the above range, it is more suitable for the gasket forming method of the present invention. These viscosity and structural viscosity ratio can be determined using a rheometer. Note that, in the present specification, the viscosity means a complex viscosity obtained using a rheometer.

Here, the structural viscosity ratio is a value obtained by dividing a viscosity (Pa·s) at a shear rate of 1.0 (1/s) by a viscosity (Pa·s) at a shear rate of 10.0 (1/s). In other words, the structural viscosity ratio is a value obtained by dividing a shear stress ($N/m^2$) at a shear rate of 1.0 (1/s) by a shear stress ($N/m^2$) at a shear rate of 10.0 (1/s).

Examples of the (meth)acrylate-based composition that undergoes radical polymerization include a composition containing a (meth)acryloyl group-containing oligomer, a (meth)acryloyl group-containing monomer, and a photoradical initiator. Note that, in the present specification, the (meth)acryloyl group-containing oligomer refers to an oligomer having one or more (meth)acryloyl groups and having a weight average molecular weight of 1000 or more. Examples of the (meth)acryloyl group-containing oligomer include, but are not particularly limited to, urethane (meth)acrylate having a polycarbonate skeleton, urethane (meth)acrylate having a polyether skeleton, urethane (meth)acrylate having a polyester skeleton, urethane (meth)acrylate having a castor oil skeleton, urethane (meth)acrylate having a polybutadiene skeleton, urethane (meth)acrylate having a hydrogenated polybutadiene skeleton, polyisobutylene-based (meth)acrylate, silicone-based (meth)acrylate, isoprene-based (meth)acrylate, hydrogenated isoprene-based (meth)acrylate, a (meth)acrylic group-containing acrylic polymer, and the like, and among these, urethane (meth)acrylate having a polycarbonate skeleton, urethane (meth)acrylate having a polybutadiene skeleton, urethane (meth)acrylate having a hydrogenated polybutadiene skeleton, and polyisobutylene-based (meth)acrylate are preferable. Examples of the (meth)acryloyl group-containing monomer include, but are not particularly limited to, ethyl (meth)acrylate, n-butyl (meth)acrylate, ter-butyl (meth)acrylate, isobutyl methacrylate, 2-ethylhexyl (meth)acrylate, isononyl (meth)acrylate, isodecyl (meth)acrylate, glycidyl (meth)acrylate, lauryl (meth)acrylate, stearyl (meth)acrylate, tetrahydrofuryl (meth)acrylate, cyclohexyl (meth)acrylate, t-butylcyclohexyl (meth)acrylate, trimethylcyclohexyl (meth)acrylate, dicyclopentanyl (meth)acrylate, dicyclopentenyl (meth)acrylate, dicyclopentenyloxy (meth)acrylate, isobornyl (meth)acrylate, adamantyl (meth)acrylate, benzyl (meth)acrylate, phenyl (meth)acrylate, phenoxyethyl (meth)acrylate, nonylphenoxyethyl (meth)acrylate, butoxyethyl (meth)acrylate, 2-hydroxyethyl (meth)acrylate, 2-hydroxypropyl (meth)acrylate, 4-hydroxybutyl (meth)acrylate, acryloylmorpholine, morpholinoethyl (meth)acrylate, dimethylaminoethyl (meth)acrylate, diethylaminoethyl (meth)acrylate, N,N-dimethylaminoethyl (meth)acrylate, N,N-dimethylaminopropyl (meth)acrylate, and the like, and among these, 2-ethylhexyl (meth)acrylate, isononyl (meth)acrylate, isodecyl (meth)acrylate, glycidyl (meth)acrylate, lauryl (meth)acrylate, stearyl (meth)acrylate, tetrahydrofurfuryl (meth)acrylate, cyclohexyl (meth)acrylate, t-butylcyclohexyl (meth)acrylate, trimethylcyclohexyl (meth)acrylate, dicyclopentanyl (meth)acrylate, dicyclopentenyl (meth)acrylate, dicyclopentenyloxy (meth)acrylate, isobornyl (meth)acrylate, and acryloylmorpholine are preferable. Examples of the photoradical initiator include, but are not particularly limited to, an acetophenone-based photoradical polymerization initiator, a benzoin-based photoradical polymerization initiator, a benzophenone-based photoradical polymerization initiator, a thioxanthone-based photoradical polymerization initiator, an acylphosphine oxide-based photoradical polymerization initiator, a titanocene-based photoradical polymerization initiator, and the like. The blending ratio of the (meth)acrylate-based composition is not particularly limited, and for example, a composition containing 0.1 parts by mass or more and 1000 parts by mass or less of the (meth)acryloyl group-containing monomer and 0.1 parts by mass or more and 30 parts by mass or less of the photoradical initiator with respect to 100 parts by mass of the (meth)acryloyl group-containing oligomer is mentioned.

Examples of the epoxy-based composition that undergoes cationic polymerization include a composition containing a cationic polymerizable compound and a photocationic initiator. Examples of the cationic polymerizable compound include, but are not particularly limited to, an epoxy resin, an alicyclic epoxy resin, an oxetane compound, a vinyl ether compound, and the like. Examples of the photocationic initiator include, but are not particularly limited to, onium salts such as aromatic iodonium salts and aromatic sulfonium salts. The blending ratio of the epoxy-based composition is not particularly limited, and for example, a composition containing 0.1 parts by mass or more and 30 parts by mass or less of the photocationic initiator with respect to 100 parts by mass of the cationic polymerizable compound is mentioned.

A thixotropic agent may be contained with respect to the active energy ray curable liquid 20 for the purpose of imparting thixotropy thereto. Examples of the thixotropic agent include, but are not particularly limited to, silica, amide wax, hydrogenated castor oil, and the like, and among these, silica is preferable.

Examples of the silica include hydrophilic silica, hydrophobic silica, and the like, and hydrophobic silica is preferable. As the hydrophobic silica, silica, which has been hydrophobized with organochlorosilanes, silicone oil, hexamethyldisilazane, alkylsilane, or the like, and the like can be used, and among these, silica which has been hydrophobized with silicone oil or hexamethyldisilazane is preferable.

The content of silica is not particularly limited, and is, for example, 0.1 mass% or more and 50 mass% or less, preferably 0.5 mass% or more and 40 mass% or less, and particularly preferably 1 mass% or more and 30 mass% or less.

The average particle size of silica is not particularly limited, and is, for example, 15 nm or more and 8500 nm or less, more preferably 20 nm or more and 8000 nm or less, and particularly preferably 25 nm or more and 7500 nm or less. By containing the silica as described above in the active energy ray curable liquid 20, the viscosity and the structural viscosity ratio can be adjusted. The average particle size means an average particle size of primary particles measured by observation with an electron microscope.

The gasket molding method of the embodiment according to the present invention includes an application step S1, a bonding step S2, a curing step S3, and a mold release step S4 in this order.

In the application step S1, first, the dispenser 50 applies the active energy ray curable liquid 20 into the cavity 41 of the molding die 40 described later in a desired gasket shape while moving, for example, in a unicursal trajectory from the application start point St to the application end point En. At this time, the application end point En may be selected so that the application trajectory partially overlaps (has an overlapping region) over the application start point St (see Fig. 6B).

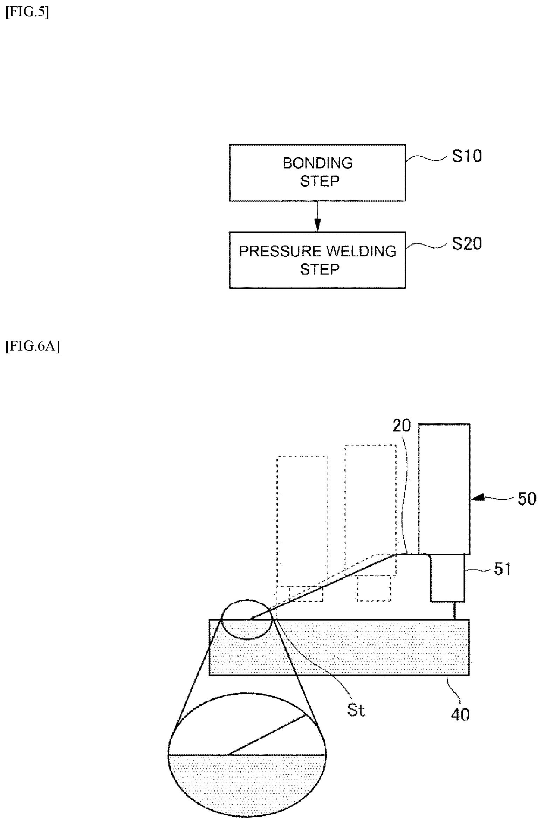

Note that, after the start of application, the active energy ray curable liquid 20 may slightly spread and move upstream from the application start point St due to its own viscosity (see Fig. 6A), but conversely, may be drawn and moved downstream, or may maintain its original position.

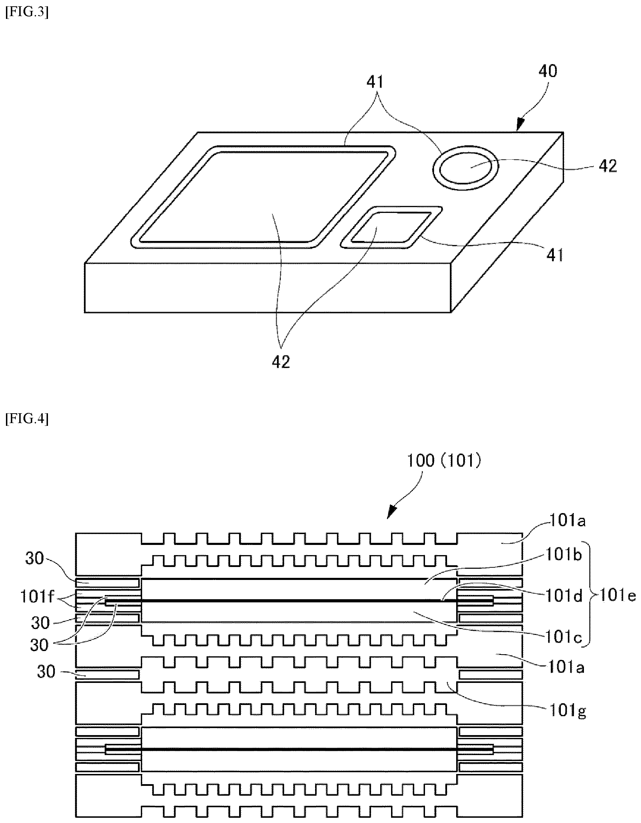

Here, the molding die 40 will be described. Fig. 3 is a schematic perspective view illustrating the molding die 40.

The molding die 40 is held on the fixed table of the bonding device and has the cavity 41 having a shape corresponding to the gasket 30 to be molded. The cavity 41 has, for example, a circular shape, elliptical annular shape, or a rectangular annular shape, and the inside thereof is configured as a land portion 42. However, the cavity 41 may be in a closed shape that does not overlap with another trajectory, such as a unicursal trajectory, or a closed shape that overlaps with another trajectory, and it may have any shape.

The cavity 41 is formed so that its cross-section has the same shape as the cross-sectional shape of the desired gasket 30, such as a substantially rectangular shape, a substantially trapezoidal shape, a substantially triangular shape (mountain shape), or a substantially semicircular shape, and among these, a substantially trapezoidal shape is preferable. The dimensions of the cavity 41 are not particularly limited, and are, for example, 1 to 20 mm in width × 0.2 to 10 mm in depth. Note that the height of the cross-section of the cavity 41 may be larger than the width, or conversely, the width may be larger than the height.

The molding die 40 is formed of a transparent material through which light can pass, for example, one or more materials selected from the group consisting of polymethyl methacrylate, a cycloolefin polymer, polycarbonate, and glass. Note that, the surface of the cavity 41 may be subjected to a surface treatment which improves the releasability.

Fig. 6A is a schematic view illustrating the behavior of the active energy ray curable liquid 20 after application of the gasket molding method of the embodiment according to the present invention, and Fig. 6B is a schematic view illustrating a state of the active energy ray curable liquid 20 in an overlapping region of the gasket molding method of the embodiment according to the present invention.

Returning to Fig. 2A, the description of the application step S1 is continued.

In the application step S1, the dispenser 50 may discharge the active energy ray curable liquid 20 in an amount equal to or more than 100% of the volume of the cavity 41 so that the active energy ray curable liquid 20 slightly overflows from the cavity 41, that is, the discharge amount per unit length may be set to 100% or more of the volume per unit length. Note that the upper limit of the discharge amount may be about 110%.

Since at the application start point St, the discharge amount from the dispenser 50 decreases, gradually increases, and reaches the prescribed value, immediately before the application end point En, the discharge amount of the dispenser 50 may be reduced so that the total discharge amount at each point of the overlapping region is equal to the discharge amount at another equilibrium point to control the thickness of the gasket 30 to be uniform (see Fig. 6B). Note that, in the application step S1, it is desirable to complete from the application start point St to the application end point En within 5 seconds to 60 seconds. Therefore, although the discharge amount is controlled according to the moving speed of the dispenser 50, the moving speed can be controlled with the discharge amount constant.

Next, in the bonding step S2, the fixed table of the bonding device which holds the molding die 40 coated with the active energy ray curable liquid 20 and the movable table which holds the workpiece 10 are reversed so as to face each other, and the molding die 40 and the workpiece 10 are bonded to each other with the uncured active energy ray curable liquid 20 interposed therebetween.

At this time, the molding die 40 and the workpiece 10 are bonded to each other with a bonding load of 1 MPa or less. Note that the bonding load may be adjusted along with the pressure control by measuring the bonding pressure, or along with the position control by measuring the bonding amount (push-in amount). In this manner, the molding die 40 and the workpiece 10 are bonded to each other with a low load to form a gasket, so that the load on the workpiece can be reduced.

Subsequently, in the curing step S3, the active energy ray curable liquid 20 interposed between the molding die 40 and the workpiece 10 is cured by irradiation with active energy rays using the active energy ray irradiation device 60. The integrated light amount is preferably, for example, an integrated light amount of 1000 mJ/cm$^2$ or more and 10000 mJ/cm$^2$ or less. However, the peak illuminance of the active energy ray is set to 100 mW/cm$^2$ or more and 5000 mW/cm$^2$ or less.

At this time, the active energy ray irradiation device 60 is provided on the side opposite to the molding surface of the molding die 40 in which the cavity 41 is formed, and the irradiated active energy rays pass through the molding die 40 having transparency and reaches the active energy ray curable liquid 20. Note that the curing shrinkage rate of the active energy ray curable liquid 20 is not particularly limited, and is, for example, preferably 10% or less and more preferably 2% or more and 10% or less.

In the mold release step S4, in the bonding device as the release device, the movable table is reversed to be separated from the fixed table so that the cured active energy ray curable liquid 20 (as the gasket 30) is pulled out of (the cavity 41 of) the molding die 40 together with the workpiece 10. Note that, in order to facilitate the removal of the gasket 30 from the molding die 40 after use, it is preferable that the inside of the cavity 41 of the molding die 40 is subjected to a water-repellent coating treatment by applying a release agent such as a fluorine-based release agent or a silicone-based release agent in advance.

Thereafter, the workpiece 10 is removed from the movable table, and a molding step S10 is completed, and the workpiece 10 having the gasket 30 directly on its surface can be obtained.

Examples

Here, experimental examples (Examples and Comparative Examples) in which the gasket 30 (design value: upper side 1.0 mm × lower side 2.7 mm × height 1.0 mm) is molded using the active energy ray curable liquid 20 having various viscosity and structural viscosity ratio values will be described.

In the experimental examples, the following six kinds of samples were used as the active energy ray curable liquid 20, and the molding die 40 having the cavity 41 having a trapezoidal shape was used, and the gasket 30 was molded according to the molding method described above.

Thereafter, a region including the application start point St and the application end point En of each molded gasket 30 was enlarged 200 times by a multi-sensor non-contact three-dimensional measuring machine (OGP manufactured by QVI), and the presence or absence of air bubble mixing was confirmed. The results thereof are shown in Table 1.

<Measurement of viscosity>

The viscosity (Pa·s) of each active energy ray curable liquid 20 was measured with a rheometer HAAKE MARS3 manufactured by Thermo Fisher Scientific K.K. at a shear rate of 1.0 (1/s) at room temperature of 25°C.

<Structural viscosity ratio>

The viscosity (Pa·s) of each active energy ray curable liquid 20 was measured with a rheometer HAAKE MARS3 manufactured by Thermo Fisher Scientific K.K. at two points of a shear rates of 1.0 (1/s) and 10.0 (1/s) at 25°C, and the structural viscosity ratio was determined based on the following formula.

$$\text{Structural viscosity ratio} = \text{Viscosity at } 1.0 \text{ (1/s)}/\text{Viscosity at } 10.0 \text{ (1/s)}$$

Example 1: Composition containing polyisobutylene-based acrylate as the oligomer having an acryloyl group, isononyl acrylate as the acryloyl group-containing monomer, a photoradical initiator, and silica treated with 9 mass% hexamethyldisilazane (average particle size: 40 nm)

Example 2: Composition containing polyisobutylene-based acrylate as the oligomer having an acryloyl group, isononyl acrylate as the acryloyl group-containing monomer, a photoradical initiator, and silica treated with 15 mass% silicone oil (average particle size: 7000 nm)

Example 3: Composition containing polyisobutylene-based acrylate as the oligomer having an acryloyl group, isononyl acrylate as the acryloyl group-containing monomer, a photoradical initiator, and silica treated with 9 mass% hexamethyldisilazane (average particle size: 30 nm)

Example 4: Composition containing polyisobutylene-based acrylate as the oligomer having an acryloyl group, isononyl acrylate as the acryloyl group-containing monomer, a photoradical initiator, and silica treated with 9 mass% silicone oil (average particle size: 50 nm)

Comparative Example 1: Composition containing polyisobutylene-based acrylate as the oligomer having an acryloyl group, isononyl acrylate as the acryloyl group-containing monomer, a photoradical initiator, and silica treated with 9 mass% silicone oil (average particle size: 9000 nm)

Comparative Example 2: Composition containing polyisobutylene-based acrylate as the oligomer having an acryloyl group, isononyl acrylate as the acryloyl group-containing monomer, a photoradical initiator, and silica treated with 9 mass% silicone oil (average particle size: 12 nm)

[Table 1]

|  | Comparative Example 1 | Example 1 | Example 2 | Example 3 | Example 4 | Comparative Example 2 |
|---|---|---|---|---|---|---|
| Viscosity | 9.68 | 14.78 | 44.24 | 54.40 | 83.96 | 155 |
| Structural viscosity ratio | 1.0 | 1.8 | 1.7 | 2.8 | 3.7 | 4.3 |
| Air bubble mixing | Present | Absent | Absent | Absent | Absent | Present |

As shown in Table 1, when the structural viscosity ratio was less than 1.5 or more than 4 as in Comparative Examples 1 and 2, mixing of air bubbles was confirmed. On the other hand, as in Examples 1 to 4, when the structural viscosity ratio of the active energy ray curable liquid 20 was 1.5 or more and 4 or less, mixing of air bubbles could not be confirmed, and the usefulness of limiting the structural viscosity ratio of the active energy ray curable liquid 20 was shown.

Finally, a case where the gasket molding method of the present embodiment is applied to a method for producing a fuel cell 100 using a fuel cell component 101 as the workpiece 10 for molding the gasket 30 will be described. Fig. 4 is a schematic cross-sectional view illustrating the fuel cell 100.

Examples of the fuel cell component 101 include a separator 101a, an electrolyte membrane 101d, a frame 101f, an electrolyte membrane/electrode assembly 101e, and the like, which constitute (a cell of) the fuel cell 100 (see Fig. 4), and the gasket 30 is molded thereon.

Of these, it is preferable to mold the gasket 30 on the separator 101a made of aluminum, stainless steel, titanium, graphite, carbon, or the like. Note that, in Fig. 4, reference numeral 101b denotes a fuel electrode, reference numeral 101c denotes an air electrode, and reference numeral 101g denotes a cooling water passage.

The method for producing the fuel cell 100 includes, in the stated order: an application step S1 of applying the active energy ray curable liquid 20 into the cavity 41 of the molding die 40; a bonding step S2 of bonding the molding die 40 coated with the active energy ray curable liquid 20 and the fuel cell component 101 to each other; a curing step S3 of curing the applied active energy ray curable liquid 20 by irradiation with an active energy ray; and a mold release step S4 of pulling off the cured active energy ray curable liquid 20 from the molding die 40 together with the fuel cell component 101.

A case where the gasket molding method of the present embodiment is applied to a sealing method for sealing between two components will be described. Fig. 5 is a flowchart illustrating a sealing method for sealing between two components.

The sealing method for sealing between two components includes a molding step S10 of molding the gasket 30 on one component (for example, the workpiece 10 described above) and a pressure welding step S20 of pressure-welding (pressure-bonding) the one component and the other component.

Since the molding step S10 is performed as in the gasket molding method described above, the description thereof is omitted.

In the pressure welding step S20, the other component is disposed on the gasket 30 molded on the one component, and the one component and the other component are pressure-welded. In the pressure bonding step S20, a pressure welding device such as the bonding device used in the bonding step S2 may be used, and position control or pressure control may be performed, but if the two components are those that are fastened and fixed together with a screw (bolt), the two components may be screwed together or may be pressure-bonded together by riveting.

Note that the sealing method is applicable not only to the fuel cell 100 described above, but also to relatively small components such as a main seal of a liquid crystal display panel.

In the application step S1 of the embodiment described above, the overlapping region of application trajectories is formed by a closed trajectory (joint) including the application start point St and the application end point En, but an application trajectory that easily includes air bubbles may include, for example, an intersection of one (preceding) trajectory and another (subsequent) trajectory. In this case, the discharge amount may be controlled such that the discharge amount of the dispenser is gradually decreased from immediately before intersecting the preceding trajectory, and the discharge amount of the dispenser is set to be a small amount (or non-discharge) at the intersection (intermediate point of the width of the trajectory), and the discharge amount of the dispenser is gradually increased to become a normal application amount after the intersection. When the structural viscosity ratio of the active energy ray curable liquid 20 is 1.5 or more and 4.0 or less, generation of air bubbles can be suppressed even at such an intersection.

As described above, the gasket molding method of the embodiment of the present invention is a gasket molding method for molding the gasket 30 on the workpiece 10, the gasket molding method including, in the stated order: an application step S1 of applying the active energy ray curable liquid 20 having a structural viscosity ratio of 1.5 or more and 4.0 or less into the cavity 41 of the molding die 40; a bonding step S2 of bonding the molding die 40 coated with the active energy ray curable liquid 20 and the workpiece 10 to each other; a curing step S3 of curing the applied active energy ray curable liquid 20 by irradiation with an active energy ray; and a mold release step S4 of pulling off the cured active energy ray curable liquid 20 from the molding die 40 together with the workpiece 10, in which the application step S1 includes an overlapping region of application trajectories.

As a result, the viscosity of the active energy ray curable liquid 20 is optimized, and the shape stability and the easiness of compatibility (compatibility) with the preceding active energy ray curable liquid 20 can be achieved. Therefore, in the overlapping region of application trajectories, mixing of air bubbles can be suppressed, and the thickness of the gasket 30 can be made uniform. The gasket 30 can be molded under a low pressure of 1 MPa or less using the active energy ray curable liquid 20.

The viscosity of the active energy ray curable liquid 20 of the embodiment at 25°C is 12 Pa·s or more and 100 Pa·s or less. As a result, it is possible to further suppress mixing of air bubbles with respect to molding of the gasket 30 having such an overlapping region.

The molding die 40 of the embodiment has the cavity 41 having a trapezoidal shape. This makes it possible to mold the gasket 30 having excellent sealability. In particular, in the application step S1, when the active energy ray curable liquid 20 is filled in the cavity 41 having a trapezoidal shape, a problem is likely to occur in that air bubbles are mixed in the molding of the gasket 30 having an overlapping region. On the other hand, this problem can be solved by adopting the active energy ray curable liquid 20 having a predetermined structural viscosity ratio as in the present embodiment.

The application step S1 of the embodiment is performed using the dispenser 50. This makes it easier to control the discharge amount of the active energy ray curable liquid 20 in the application step S1. The position and speed control of the dispenser 50 can be simplified.

The overlapping region of application trajectories of the embodiment includes the application start point St and the application end point En. The overlapping region of application trajectories of the embodiment includes an intersection of one trajectory and another trajectory.

It is possible to suppress mixing of air bubbles with respect to molding of the gasket 30 having such an overlapping region.

The fuel cell 100 of the embodiment includes the gasket 30 obtained by the gasket molding method described above, and the workpiece 10 is the fuel cell component 101. The fuel cell component 101 is selected from the group consisting of the separator 101a, the electrolyte membrane 101d, the frame 101f, and the electrolyte membrane/electrode assembly 101e. Note that the workpiece 10 including the gasket 30 can also be referred to as a composite body.

The method for producing the fuel cell 100 of the embodiment includes an application step S1 of applying the active energy ray curable liquid 20 into the cavity 41 of the molding die 40; a bonding step S2 of bonding the molding die 40 coated with the active energy ray curable liquid 20 and the fuel cell component 101 to each other; a curing step S3 of curing the applied active energy ray curable liquid 20 by irradiation with an active energy ray; and a mold release step S4 of pulling off the cured active energy ray curable liquid 20 from the molding die 40 together with the fuel cell component 101.

As described above, the gasket molding method can also be applied to the method for producing the fuel cell 100. In the gasket molding method of the present invention, molding can be performed under a low pressure and the gasket 30 can be formed by bonding with a low load, so that the load on the fuel cell component 101 can be reduced.

The sealing method of the embodiment is a sealing method for sealing between two workpieces 10, the sealing method including: a molding step S10 of molding the gasket 30 on one workpiece 10 by the gasket molding method described above; and a pressure welding step S20 of disposing the other workpiece 10 on the gasket 30 molded on the one workpiece 10 and pressure-welding the one workpiece 10 and the other workpiece 10. As described above, the gasket molding method can also be applied to the sealing method.

The gasket molding device of the embodiment includes: an application device that discharges the active energy ray curable liquid 20 onto the workpiece 10 using the dispenser 50; a bonding device that includes the molding die 40 having transparency and bonds the workpiece 10 to the molding die 40; a drive device that moves the workpiece 10 and the dispenser 50 relative to each other; and the active energy ray irradiation device 60 that irradiates the active energy ray curable liquid 20 with an active energy ray. Accordingly, the gasket 30 can be molded under a low pressure by discharging the active energy ray curable liquid 20 using the dispenser 50.

Although preferred embodiments of the present invention have been described in detail above, the present invention is not limited to the above-described embodiments, and various modifications and changes can be made within the scope of the gist of the present invention described in the claims.

Reference Signs List

| 10 | Workpiece |
| 10a | Opening |
| 10b | Recess |
| 20 | Active energy ray curable liquid |
| 30 | Gasket |
| 40 | Molding die |
| 41 | Cavity |
| 42 | Land portion |
| 50 | Dispenser |
| 51 | Nozzle |

| 60 | Active energy ray irradiation device |
|---|---|
| 100 | Fuel cell |
| 101 | Fuel cell component |
| 101a | Separator |
| 101b | Fuel electrode |
| 101c | Air electrode |
| 101d | Electrolyte membrane |
| 101e | Electrolyte membrane/electrode assembly |
| 101f | Frame |
| 101g | Cooling water passage |
| St | Application start point |
| En | Application end point |

**Claims**

1. A gasket molding method for molding a gasket on a workpiece, the gasket molding method comprising, in the stated order:

   an application step of applying an active energy ray curable liquid having a structural viscosity ratio of 1.5 or more and 4.0 or less into a cavity of a molding die;
   a bonding step of bonding the molding die coated with the active energy ray curable liquid and the workpiece to each other;
   a curing step of curing the applied active energy ray curable liquid by irradiation with an active energy ray; and
   a mold release step of pulling off the cured active energy ray curable liquid from the molding die together with the workpiece,
   wherein the application step includes an overlapping region of application trajectories,
   provided that the structural viscosity ratio is a value obtained by dividing a viscosity (Pa·s) at a shear rate of 1.0 (1/s) by a viscosity (Pa·s) at a shear rate of 10.0 (1/s).

2. The gasket molding method according to claim 1, wherein a viscosity at a shear rate of 1.0 (1/s) at 25°C of the active energy ray curable liquid is 12 Pa·s or more and 100 Pa·s or less.

3. The gasket molding method according to claim 1 or 2, wherein a viscosity at a shear rate of 10.0 (1/s) at 25°C of the active energy ray curable liquid is 5 Pa·s or more and 70 Pa·s or less.

4. The gasket molding method according to claim 1 or 2, wherein the active energy ray curable liquid contains an oligomer having an acryloyl group, an acryloyl group-containing monomer, a photoradical initiator, and silica.

5. The gasket molding method according to claim 4, wherein an average particle size of the silica is 15 nm or more and 8500 nm or less.

6. The gasket molding method according to claim 4, wherein a content of the silica is 0.1 mass% or more and 50 mass% or less.

7. The gasket molding method according to claim 1 or 2, wherein the molding die has a cavity having a trapezoidal shape.

8. The gasket molding method according to claim 1 or 2, wherein the application step is performed using a dispenser.

9. The gasket molding method according to claim 8, wherein a relative moving speed of the dispenser in the application step is 1 mm/sec or more and 500 mm/sec or less.

10. The gasket molding method according to claim 1 or 2, wherein the overlapping region of application trajectories includes an application start point and an application end point.

11. The gasket molding method according to claim 1 or 2, wherein the overlapping region of application trajectories includes an intersection of one trajectory and another trajectory.

12. The gasket molding method according to claim 1 or 2, wherein the inside of the cavity of the molding die is subjected to a water-repellent coating treatment.

13. A gasket obtained by the gasket molding method according to claim 1 or 2.

14. A composite body comprising a gasket obtained by the gasket molding method according to claim 1 or 2 on a fuel cell component that is a workpiece.

15. A fuel cell comprising the composite body according to claim 14.

16. The fuel cell according to claim 15, wherein the fuel cell component is selected from the group consisting of a separator, an electrolyte membrane, a frame, and an electrolyte membrane/electrode assembly.

17. A sealing method for sealing between two workpieces, the sealing method comprising:

a molding step of molding a gasket on one workpiece by the gasket molding method according to claim 1 or 2; and
a pressure welding step of disposing the other workpiece on the gasket molded on the one workpiece and pressure-welding the one workpiece and the other workpiece.

[FIG.1]

[FIG.2A]

```
┌─────────────────────┐
│     APPLICATION     │ ⌇ S1
│        STEP         │
└─────────────────────┘
           │
           ▼
┌─────────────────────┐
│      BONDING        │ ⌇ S2
│        STEP         │
└─────────────────────┘
           │
           ▼
┌─────────────────────┐
│      CURING         │ ⌇ S3
│        STEP         │
└─────────────────────┘
           │
           ▼
┌─────────────────────┐
│    MOLD RELEASE     │ ⌇ S4
│        STEP         │
└─────────────────────┘
           │
           ▼
┌─────────────────────┐
│  COMPLETE MOLDING   │ ⌇ S10
│        STEP         │
└─────────────────────┘
```

[FIG.2B]

[FIG.3]

[FIG.4]

[FIG.5]

[FIG.6A]

[FIG.6B]

[FIG.7A]

[FIG.7B]

## INTERNATIONAL SEARCH REPORT

| International application No. |
|---|
| **PCT/JP2023/038602** |

**A. CLASSIFICATION OF SUBJECT MATTER**

***B29C 39/24***(2006.01)i; ***B29C 39/44***(2006.01)i; ***F16J 15/00***(2006.01)i; ***F16J 15/14***(2006.01)i
FI: B29C39/44; B29C39/24; F16J15/00 C; F16J15/14 C

According to International Patent Classification (IPC) or to both national classification and IPC

**B. FIELDS SEARCHED**

Minimum documentation searched (classification system followed by classification symbols)

B29C39/24; B29C39/44; F16J15/00; F16J15/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/190421 A1 (THREEBOND CO., LTD.) 18 October 2018 (2018-10-18) paragraphs [0011], [0042], [0048], [0057], [0074], [0075], fig. 1, 2 | 1-17 |
| A | JP 2009-524196 A (HENKEL CORP.) 25 June 2009 (2009-06-25) entire text, all drawings | 1-17 |
| A | JP 2017-160993 A (SHINDENGEN ELECTRIC MFG. CO., LTD.) 14 September 2017 (2017-09-14) entire text, all drawings | 1-17 |
| A | JP 2008-168448 A (NOK CORP.) 24 July 2008 (2008-07-24) entire text, all drawings | 1-17 |
| A | JP 2017-015240 A (NOK CORP.) 19 January 2017 (2017-01-19) entire text, all drawings | 1-17 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2023/038602**

| Patent document cited in search report | | | Publication date (day/month/year) | Patent family member(s) | | | Publication date (day/month/year) |
|---|---|---|---|---|---|---|---|
| WO | 2018/190421 | A1 | 18 October 2018 | US 2020/0157270 A1 paragraphs [0016]-[0037], [0075], [0081], [0090], [0109], [0110], fig. 1, 2 EP 3611200 A1 CN 110520454 A | | | |
| JP | 2009-524196 | A | 25 June 2009 | US 2009/0162715 A1 entire text, all drawings WO 2007/084472 A2 CN 101401240 A | | | |
| JP | 2017-160993 | A | 14 September 2017 | (Family: none) | | | |
| JP | 2008-168448 | A | 24 July 2008 | (Family: none) | | | |
| JP | 2017-015240 | A | 19 January 2017 | US 2018/0178441 A1 entire text, all drawings EP 3315827 A1 CN 107709848 A | | | |

Form PCT/ISA/210 (patent family annex) (January 2015)

**EP 4 620 649 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017015240 A